# EUROPEAN PATENT APPLICATION

(11) **EP 1 676 986 A1**
(43) Date of publication of application: **05.07.2006**
(21) Application number: 04787625.5
(22) Date of filing: 02.09.2004
(51) Int. Cl.: F01N 3/08, F01N 3/36

(54) **EXHAUST GAS PURIFICATION DEVICE AND EXHAUST GAS PURIFICATION METHOD FOR ENGINE**

(30) Priority: 30.09.2003 JP 2003341587
(71) Applicant: Nissan Diesel Motor Co., Ltd., Ageo-shi Saitama 362-8523 (JP)
(72) Inventor: HIRATA, Kiminobu, c/o NISSAN DIESEL MOTOR CO. LTD., Ageo-shi Saitama 3628523 (JP); SATOU, Hirokazu, c/o NISSAN DIESEL MOTOR CO. LTD., Ageo-shi Saitama 3628523 (JP)
(74) Representative: Driver, Virginia Rozanne
(86) International application number: PCT/JP2004/012745
(87) International publication number: WO 2005/033480

(57) **Abstract**

In an exhaust emission purifying apparatus for an engine provided with: a NOₓ reduction catalytic converter disposed in an engine exhaust pipe, for reductively purifying NOₓ with ammonia produced by the urea aqueous solution; and an injection nozzle injection-supplying the urea aqueous solution into the exhaust gas at an upstream position of the NOₓ reduction catalytic converter, a hydrolytic catalyst that accelerates the hydrolysis reaction by which ammonia is produced by the urea aqueous solution, is applied to at least one of an inner passage of the injection nozzle, the exhaust pipe positioned between the injection nozzle and the NOₓ reduction catalytic converter, and a diffuser panel diffusing the exhaust gas between the injection nozzle and the reduction catalytic converter, and then, the hydrolysis reaction of the urea aqueous solution being in contact with the hydrolytic catalyst is accelerated, to thereby suppress the deposition of urea in the exhaust pipe.

## Description

### TECHNICAL FIELD

The present invention relates generally to an exhaust emission purifying technology for an engine, in which nitrogen oxides (NOₓ) in the exhaust gas is reductively purified by using ammonia produced by the urea aqueous solution that is injection-supplied into an exhaust pipe, and in particular, relates to a technology for suppressing the deposition of urea into the exhaust pipe of the engine.

### BACKGROUND ART

Japanese Unexamined Patent Publication No. 2000-27627 (Patent literature 1) discloses an exhaust emission purifying apparatus as a proposal for a catalytic converter purifying system for reductively purifying NOₓ contained in the exhaust gas of an engine.

In such a conventional exhaust emission purifying apparatus, a NOₓ reduction catalytic converter is disposed in an exhaust pipe of the engine, and a reducing agent is injection-supplied to the exhaust upstream of the NOₓ reduction catalytic converter, so that NOₓ in the exhaust gas and the reducing agent are subjected to the catalytic-reduction reaction, to purify NOₓ into harmless components. For the reduction reaction, ammonia having the good reactivity to NOₓ is used. Ammonia is obtained by injecting the urea aqueous solution into the exhaust pipe to perform the hydrolysis reaction using the exhaust heat and the water vapor in the exhaust gas.
Patent literature: Japanese Unexamined Patent Publication No. 2000-27627

### DISCLOSURE OF THE INVENTION

### PROBLEMS TO BE SOLVED BY THE INVENTION

However, in the above described conventional exhaust emission purifying apparatus, when an amount of injection-supply flow of the urea aqueous solution is large in relation to the temperature and a flow amount of the exhaust gas, the hydrolysis of the urea aqueous solution is insufficient, and therefore, only the water content may be evaporated from the urea aqueous solution, resulting in the urea being deposited. Then, if the urea is accumulated on the wall of the exhaust pipe, since such accumulated urea prevents the smooth flowing of the exhaust gas, so as to increase resistance against flow of the exhaust gas, there is a possibility that the exhaust gas pressure rises or the fuel consumption is degraded.

Therefore, in view of the above conventional problems, the present invention has an object to provide an exhaust emission purifying technology for an engine, for accelerating the hydrolysis reaction by which ammonia is produced by the urea aqueous solution, to suppress the deposition of urea in an exhaust pipe.

### MEANS FOR SOLVING THE PROBLEMS

In order to achieve the above object, in an exhaust emission purifying technology for an engine according to the present invention, when nitrogen oxides are reductively purified by a reduction catalytic converter disposed in an exhaust pipe of the engine, using ammonia produced by the urea aqueous solution, a hydrolytic catalyst is applied to at least one of an inner passage of an injection nozzle which injects to supply the urea aqueous solution to the exhaust gas at an upstream position of the reduction catalytic converter, the exhaust pipe positioned between the injection nozzle and the reduction catalytic converter, and a diffuser panel which diffuses the exhaust gas between the injection nozzle and the reduction catalytic converter, to accelerate the hydrolysis reaction by which ammonia is produced by the urea aqueous solution. Here, as the hydrolytic catalyst, it is desirable to use an alkaline catalyst containing any one of hydroxide, carbonate and silicate of alkali metal, as a main component thereof.

### EFFECTS OF THE INVENTION

With the exhaust emission purifying technology for the engine according to the present invention, nitrogen oxides contained in the exhaust gas of the engine is reductively purified in the reduction catalytic converter using ammonia produced by the urea aqueous solution. At this time, if the hydrolytic catalyst is applied to the inner passage of the injection nozzle, since the urea aqueous solution is in contact with the hydrolytic catalyst when it passes through the injection nozzle, the hydrolysis reaction of the urea aqueous solution is accelerated. Further, if the hydrolytic catalyst is applied to the exhaust pipe positioned between the injection nozzle and the reduction catalytic converter, even if liquid drops of the urea aqueous solution attach to an inner wall of the exhaust pipe, since such liquid drops are in contact with the hydrolytic catalyst, the hydrolysis reaction of the liquid drops of the urea aqueous solution is accelerated. Moreover, if the hydrolytic catalyst is applied to the diffuser panel, since the urea aqueous solution is in contact with the hydrolytic catalyst when it passes through the diffuser panel, the hydrolysis reaction of the urea aqueous solution is accelerated. Therefore, the deposition of urea is suppressed, so that urea is hardly accumulated in the exhaust pipe. Consequently, it is possible to suppress the rise of exhaust gas pressure, the degradation of fuel consumption, and the like.

Moreover, if the hydrolytic catalyst is applied to the inner passage of the injection nozzle, even if the liquid drops of the urea aqueous solution attach to the inner passage when the injection supply of the urea aqueous solution is stopped, these liquid drops are in contact with the hydrolytic catalyst, so that the hydrolysis reaction of the urea aqueous solution is accelerated. Therefore, the deposition of urea is suppressed, so that urea is hard to be accumulated in the inner passage of the injection nozzle. Consequently, the clogging of the injection nozzle is suppressed.

### BRIEF DESCRIPTION OF THE DRAWINGS

Fig. 1 is a diagram showing an entire configuration of an exhaust emission purifying apparatus realizing the present invention;
Fig. 2 is a cross section of an injection nozzle according to another embodiment of the present invention; and
Fig. 3 is a cross section of an exhaust pipe according to a further embodiment of the present invention.

### EXPLANATION OF REFERENCE SYMBOLS

1 ... engine, 2 ... exhaust pipe, 2a ... inner wall, 3 ... NOₓ reduction catalytic converter, 5 ... injection nozzle, 5a ... inner wall, 30 ... hydrolytic catalyst, 35 ... diffuser panel

### BEST MODE FOR CARRYING OUT THE INVENTION

The present invention will be described referring to the appended drawings hereunder.

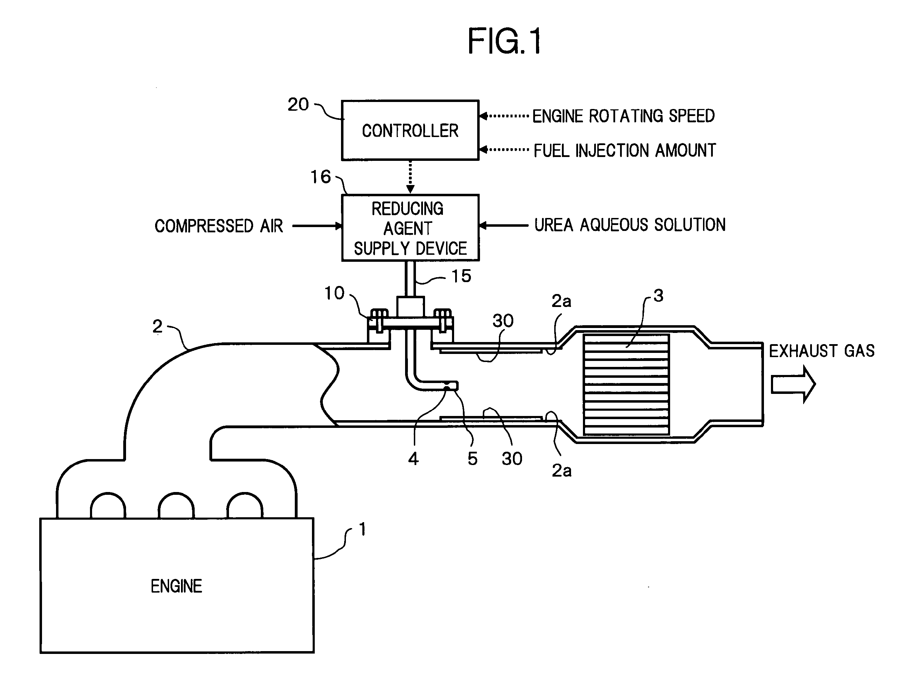

Figure 1 shows an entire configuration of an exhaust emission purifying apparatus for an engine, which realizes the present invention.

In an exhaust pipe 2 of an engine 1, a NOₓ reduction catalytic converter 3 which reductively purifies NOₓ by using ammonia produced by the urea aqueous solution, is disposed. Further, on the exhaust upstream of the NOₓ reduction catalytic converter 3, an injection nozzle 5 which injects to supply the urea aqueous solution via a nozzle hole 4 opened to the inside of the exhaust pipe 2, is disposed. The injection nozzle 5 is supportively fixed in a cantilevered state via a flange 10 which is detachably mounted on a peripheral wall of the exhaust pipe 2, so that a tip end thereof extends to the exhaust downstream along approximately the center of axle of the exhaust pipe 2, and also, is communicatively connected to a reducing agent supply device 16 via piping 15. Then, the injection nozzle 5 injects to supply the urea aqueous solution from the nozzle hole 4 outward in a direction approximately orthogonal to the central axis of the exhaust pipe 2, so that the urea aqueous solution is mixed approximately in uniform with the exhaust gas passing through the exhaust pipe 2.

The reducing agent supply device 16 mixes the urea aqueous solution with the compressed air, to make the urea aqueous solution to be in an atomized state, and supplies the urea aqueous solution in the atomized state to the injection nozzle 5. Further, in order to control an amount of injection flow of the urea aqueous solution according to engine operating conditions, there is provided a control unit 20 incorporating therein a computer. The control unit 20 controls the reducing agent supply device 16 according to the engine operating conditions, i.e., an engine rotating speed and a fuel injection amount, which are input via CAN (Controller Area Network).

A hydrolytic catalyst 30 is applied to an inner wall 2a of the exhaust pipe 2 which is positioned between the injection nozzle 5 and the NOₓ reduction catalytic converter 3. The hydrolytic catalyst 30 is an alkaline catalyst containing any one of hydroxide, carbonate and silicate of alkali metal, as a main component thereof, and is for accelerating the hydrolysis reaction by ammonia which is produced by the urea aqueous solution.

Next, a description of an operation of the exhaust emission purifying apparatus having the above configuration will be provided hereunder.

The exhaust gas of the engine 1 passes through the exhaust pipe 2 to be led into the NOₓ reduction catalytic converter 3. On the other hand, the control unit 20 controls the reducing agent supply device 16 based on the engine rotating speed and the fuel injection amount, so that the urea aqueous solution of necessary amount according to the engine operating conditions is injection-supplied from the injection nozzle 5 to the exhaust gas at a position upstream of the NOₓ reduction catalytic converter 3. The urea aqueous solution injection-supplied from the injection nozzle 5 is hydrolyzed by the exhaust heat and the water vapor of the exhaust gas, and thereby, ammonia is produced. In the NOₓ reduction catalytic converter 3, produced ammonia is subjected to the reduction reaction to NOₓ in the exhaust gas, to be purified into the water and the harmless gas.

At this time, since the hydrolytic catalyst 30 is applied to the inner wall 2a of the exhaust pipe 2, which is positioned between the injection nozzle 5 and the NOₓ reduction catalytic converter 3, even if the urea aqueous solution injection-supplied from the injection nozzle 5 becomes the liquid drops to attach to the inner wall 2a of the exhaust pipe 2, the liquid drops are in contact with the hydrolytic catalyst 30, and accordingly, the hydrolytic reaction thereof is accelerated. Therefore, since it is suppressed that urea is deposited from the urea aqueous solution injection-supplied into the exhaust pipe 2, urea is hardly accumulated by precipitation on the inner wall 2a of the exhaust pipe 2, so that the prevention of flowing of the exhaust gas may be avoided. Then, since the flowing of the exhaust gas is not prevented, it is possible to suppress the rise in the exhaust gas pressure as well as the degradation of fuel consumption.

Further, since the hydrolytic catalyst 30 is the alkaline catalyst containing any one of hydroxide, carbonate and silicate of alkali metal, as the main component thereof, it is possible to further accelerate the hydrolysis reaction by which ammonia is produced by the urea aqueous solution.

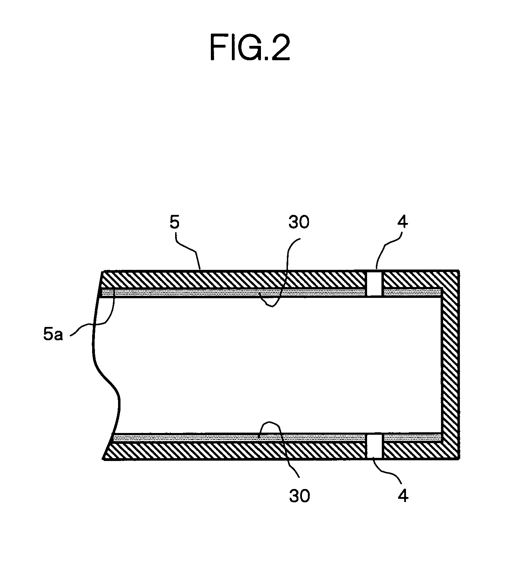

In the above embodiment, the hydrolytic catalyst 30 is applied to the inner wall 2a of the exhaust pipe 2. However, as shown in Fig. 2, the hydrolytic catalyst 30 may be applied to an inner wall 5a of an inner passage of the injection nozzle 5. In such a configuration, since the urea aqueous solution is in contact with the hydrolytic catalyst 30 when it passes through the injection nozzle 5, the hydrolysis reaction of the urea aqueous solution is accelerated, and the deposition of urea can be suppressed. At this time, ammonia is produced in the inner passage of the injection nozzle 5, but does not attach to the inner wall 5a since it is in a gas state at the room temperature. Further, even if the liquid drops of the urea aqueous solution attach to the inner wall 5a of the inner passage of the injection nozzle 5 when the injection-supply of the urea aqueous solution is stopped, the liquid drops are in contact with the hydrolytic catalyst 30, so that the hydrolysis reaction thereof is accelerated. Therefore, since the deposition of urea in the inner passage of the injection nozzle 5 is suppressed, urea is hardly accumulated on the inner wall 5a of the injection nozzle 5, so that the clogging of the inner passage and the nozzle hole 4 of the injection nozzle 5 can be suppressed.

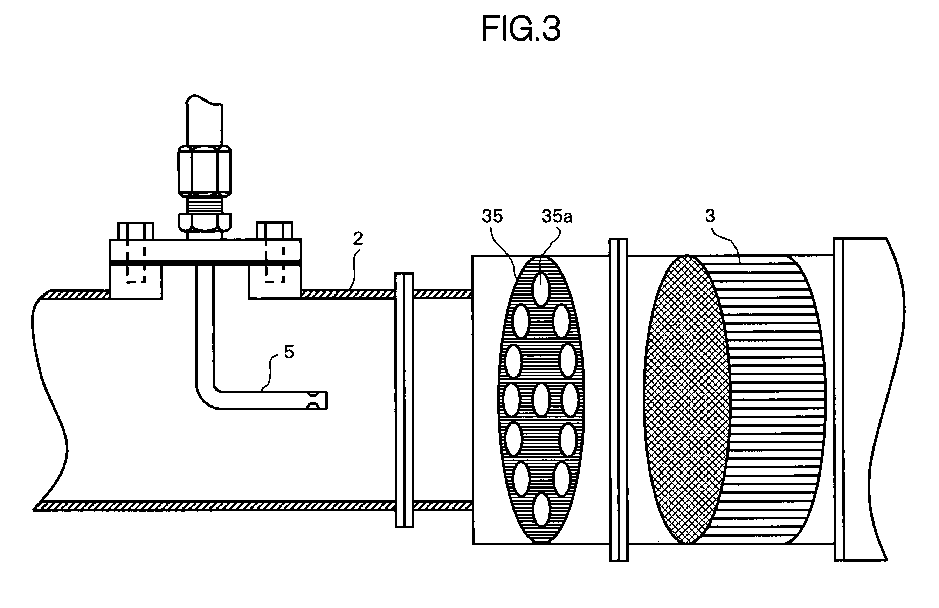

Moreover, as shown in Fig. 3, the hydrolytic catalyst 30 may be applied to a diffuser panel 35. The diffuser panel 35 is a panel disposed for partitioning the inside of the exhaust pipe 2 between the injection nozzle 5 and the NOₓ reduction catalytic converter 3, and a large number of openings 35a are bored on the diffuser panel 35, to diffuse the exhaust gas flowing through the exhaust pipe 2 approximately in uniform. In such a configuration, since the urea aqueous solution injection-supplied from the injection nozzle 5 is in contact with the hydrolytic catalyst 30 when it passes through the diffuser panel 35, the hydrolysis reaction thereof is accelerated, so that the deposition of urea can be suppressed.

Incidentally, the hydrolytic catalyst 30 is not limited to be applied to any one of the inner passage of the injection nozzle 5, the exhaust pipe 2 positioned between the injection nozzle 5 and the NOₓ reduction catalytic converter 3, and the diffuser panel 35, and may be applied to an arbitrary combination of two or more of these,. In such a configuration, the hydrolysis reaction in the entire exhaust emission purifying apparatus is further accelerated. Therefore, the deposition of urea can be further suppressed.

### INDUSTRIAL APPLICABILITY

As described in the above, the exhaust emission purifying technology for the engine according to the present invention accelerates the hydrolysis reaction of the urea aqueous solution by the hydrolytic catalyst to suppress the deposition of urea into the exhaust pipe. Thus, since the rise of exhaust gas pressure, the degradation of fuel consumption and the like hardly occur, the exhaust emission purifying technology according to present invention is significantly useful.

## Claims

1. An exhaust emission purifying apparatus for an engine comprising:
a reduction catalytic converter disposed in an engine exhaust pipe, for reductively purifying nitrogen oxides with ammonia produced by the urea aqueous solution; and
an injection nozzle that injection-supplies the urea aqueous solution into an exhaust gas at a position upstream of said reduction catalytic converter,
wherein a hydrolytic catalyst for accelerating the hydrolysis reaction by which ammonia is produced by the urea aqueous solution is applied to at least one of an inner passage of said injection nozzle, the exhaust pipe positioned between said injection nozzle and said reduction catalytic converter, and a diffuser panel that diffuses the exhaust gas between said injection nozzle and said reduction catalytic converter.

2. The apparatus according to claim 1, wherein said hydrolytic catalyst is an alkaline catalyst.

3. The apparatus according to claim 2, wherein said alkaline catalyst contains any one of hydroxide, carbonate and silicate of alkali metal, as a main component thereof.

4. An exhaust emission purifying method for an engine, for reductively purifying nitrogen oxides using ammonia produced by the urea aqueous solution, by a reduction catalytic converter disposed in an engine exhaust pipe,
wherein a hydrolytic catalyst is applied to at least one of an inner passage of an injection nozzle that injection-supplies the urea aqueous solution into an exhaust gas at a position upstream of said reduction catalytic converter, the exhaust pipe positioned between said injection nozzle and said reduction catalytic converter, and a diffuser panel which diffuses the exhaust gas between said injection nozzle and said reduction catalytic converter, to accelerate the hydrolysis reaction by which ammonia is produced by the urea aqueous solution.
